Europäisches Patentamt

European Patent Office

Office européen des brevets

(11) Publication number: **0 270 873**
**A2**

## (12) EUROPEAN PATENT APPLICATION

(21) Application number: **87116782.1**

(22) Date of filing: **13.11.87**

(51) Int. Cl.4: **G06F 9/38**

Die Bezeichnung der Erfindung wurde geändert
(Richtlinien für die Prüfung im EPA, A-III, 7.3).

(30) Priority: **12.12.86 US 941246**

(43) Date of publication of application:
**15.06.88 Bulletin 88/24**

(84) Designated Contracting States:
**DE FR GB**

(71) Applicant: **International Business Machines
Corporation
Old Orchard Road
Armonk, N.Y. 10504(US)**

(72) Inventor: **Vandling, Gilbert Clyde
199C East Campville Road
Endicott New York 13760(US)**

(74) Representative: **Jost, Ottokarl, Dipl.-Ing.
IBM Deutschland GmbH Patentwesen und
Urheberrecht Schönaicher Strasse 220
D-7030 Böblingen(DE)**

(54) **Single ALU computer system.**

(57) A computer system with instruction and operand
prefetch and having a single ALU and an instruction
set which includes at least both register to register
(RR) and register to storage (RS/RX) type instruc-
tions obtains improved performance by interspersing
effective address calculation cycles and instruction
execution cycles to take advantage of or utilize oth-
erwise unused or wasted processing cycles while
maintaining sequential instruction execution.

FIG. 1

## AN IMPROVED HIGH PERFORMANCE SINGLE ALU COMPUTER SYSTEM

This invention pertains to an improved high performance computer system and more particularly to such a system which has a single ALU and which pre-fetches instructions and operands. The invention finds particular utility in relatively low cost computer systems which have a single interface to system storage as found in computers used as controllers, personal computers, mini computers and computers used in small and medium systems.

Computers in the past have been designed where the machine cycle time and the storage cycle time are equal, but the storage access time consumes multiple machine cycles. This means that after an address is presented to storage, the data is not available from storage until several machine cycles later, the number of machine cycles being dependent upon the particular storage system and the technology used to implement it. Consequently, time is normally wasted while waiting for the data. This wasted time or latency can be reduced or eliminated in some instances if other tasks can be performed while waiting for the data. Of course the order of the computer system must not be violated otherwise chaos results. In other words instruction execution phases still have to be performed in sequence.

In the past a certain amount of latency could be eliminated by prefetching instructions and decoding a first instruction while another instruction was being fetched. This is possible to do because the instruction decode hardware is not otherwise being used in the instruction fetch process. There is a cost, however; and that is the cost of hardware for buffering the instructions and additional control hardware. Whether or not the decoded instruction can be executed right away depends upon the instruction type and if operands required during the execution of the instruction are available. For some instructions such as register to register (RR) instructions the operands are available to the central processing unit (CPU) at the time of instruction decode because they are in registers. Hence, if the arithmetic and processing unit (ALU) of the CPU is not busy, the instruction can be executed immediately after being decoded. In some small computer systems, in order to reduce hardware costs, the ALU is used not only for arithmetic and logic operations during instruction execution, but is used for address computation. This address computation is required for computing storage address for both instructions and data or operands.

Instructions such as register to storage (RS) instructions must retrieve one of the operands from storage before the instruction can be completely executed. The fetching of the operand of course involves storage latency and thus limiting the performance of the computer system. Using operand pre-fetch as set forth in the publication entitled "MEANS FOR INCORPORATING OPERAND PREFETCH IN A COMPUTER WITH A SINGLE ALU" by G. C. Vandling, IBM Technical Disclosure Bulletin VOL. 27 No. 10 B, March 1985, page 5989, the performance degradation can be eliminated by structuring the system whereby instruction n-1 is executed and thereafter the effective address for instruction n+1 is computed, both of these operations taking place during the fetch time of the operand for instruction n.

While the arrangement set forth in the aforementioned publication improves performance for RS instructions, it is not compatible with RR instructions, i.e. if RS instructions are followed by a RR instruction an unused machine cycle occurs. The present invention makes the intermixing of RS and RR instructions more efficient and optimizes the use of the ALU so as to use otherwise unused machine cycles.

A principal object of the invention is to improve performance in a computer system having instruction and operand pre-fetch and having a single ALU used for both effective address calculation and for arithmetic and logical operations during instruction execution. Another object of the invention is to optimize the use of the ALU so as to use otherwise unused processing or machine cycles with a minimum addition of hardware.

These objects are achieved by interspersing effective address calculation cycles between execution cycles so as to maximize use of the ALU when processing both RR and RS types of instructions when a particular instruction type sequence is detected and still maintain sequential instruction execution phase. Computation of effective addresses does not change the machine state, however, if there is an interrupt the computed address or addresses and prefetched instructions and operands are discarded.

Further scope of applicability of the present invention will become apparent from the detailed description presented hereinafter. It should be understood, however, that the detailed description and the specific examples, while representing a preferred embodiment of the invention, are given by way of example only, since various changes and modifications within the spirit and scope of the invention will become obvious to one skilled in the art from a reading of the following detailed description.

A full understanding of the present invention will be obtained from the detailed description of the preferred embodiment presented hereinbelow, and the accompanying drawings, which are given by way of illustration only and are not intended to be limitative of the present invention, and wherein:

Fig. 1 is a schematic block diagram of the invention;

Fig. 2 is a diagram showing storage cycle and access times;

Fig. 3 is a diagram showing overlapped or pipelined storage accesses;

Fig. 4 is a diagram showing cycle times for a RR type instruction in a prior art computer system where the decode of one RR instruction takes place during the execution of another RR instruction;

Fig. 5 is a diagram showing cycle times for a pair of RS type instructions in a prior art computer system;

Fig. 6 is a diagram showing cycle times for a sequence of RS/RR/RS instructions in a prior art computer system;

Fig. 7 is a diagram showing cycle times for a sequence of RS/RR instructions in a computer system incorporating the present invention;

Fig. 8 is a diagram similar to Fig. 7 but where the ALU sequence is delayed one cycle;

Fig. 9 is a diagram showing cycle times for a sequence of RS type instructions in another prior art computer system; and,

Fig. 10 is a diagram showing cycle times for a sequence of RS type instructions in a computer system incorporating the present invention.

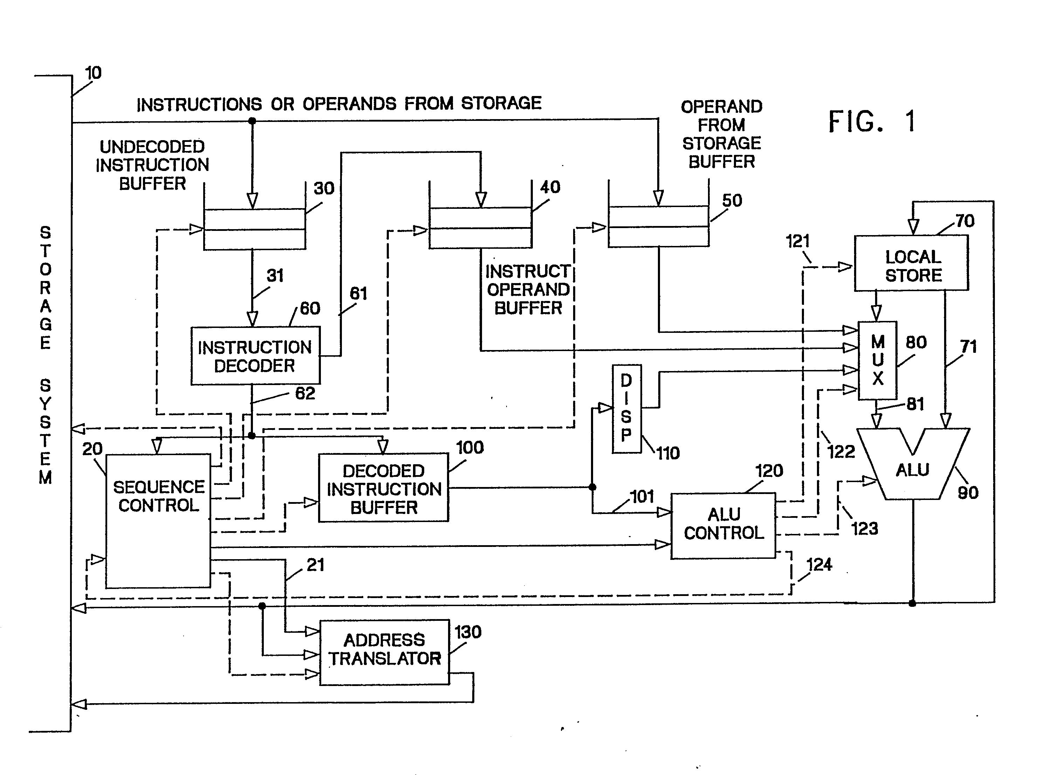

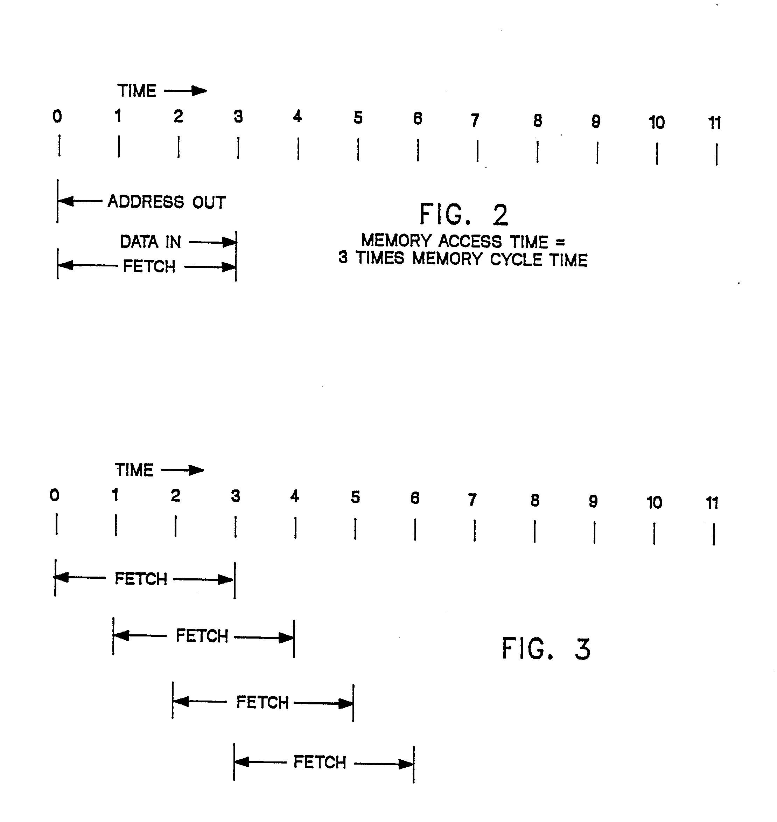

Referring to the drawings and particularly to Fig. 1 the invention is illustrated by way of example as being incorporated in a computer system having a main storage system 10 for storing instructions and data i.e. operands. Storage system 10, like prior art type storage systems, has a cycle time and an access time as shown in Fig. 2. When storage fetches are made sequentially, and in this instance after three sequential fetches, instructions or data are available at every cycle time.

The addresses for addressing storage system 10 either come via ALU 90 or from sequence control 20 and are applied to address translator 130 which translates the applied address into a form for addressing storage 10. Sequence control 20 can be implemented as a hard wired device or can be a microprocessor to generate the necessary control signals and provide for example the start up address for fetching the first instruction to be executed. In this invention instruction fetching takes place until instruction buffer 30 is filled or until the storage system is preempted. It should be noted however, as will be seen later herein, operand fetching has priority over instruction fetching. The instruction fetch control within sequence control 20, after an instruction is fetched, then updates the instruction fetch address and sends the updated address over buss 21 to address translator 130 on the succeeding clock cycle. As previously described, address translator 130 sends the translated address to storage system 10.

The first instruction entered into buffer 30 is accessed by instruction decoder 60 via buss 31. Instruction decoder 30 is of the type well known in the art and functions to determine the type of instruction, operand address offsets or displacements and other control information and data. The control information includes data for controlling the operation and data for designating one or more general registers which are used as operand registers and address registers. The data included in the decoded instruction consists of constants and other data needed at execution time. Operand data is sent from instruction decoder 60 over buss 61 to instruction operand buffer 40. The remaining decoded instruction data is sent to instruction decode buffer 100 and sequence control 20 is informed that the instruction was decoded.

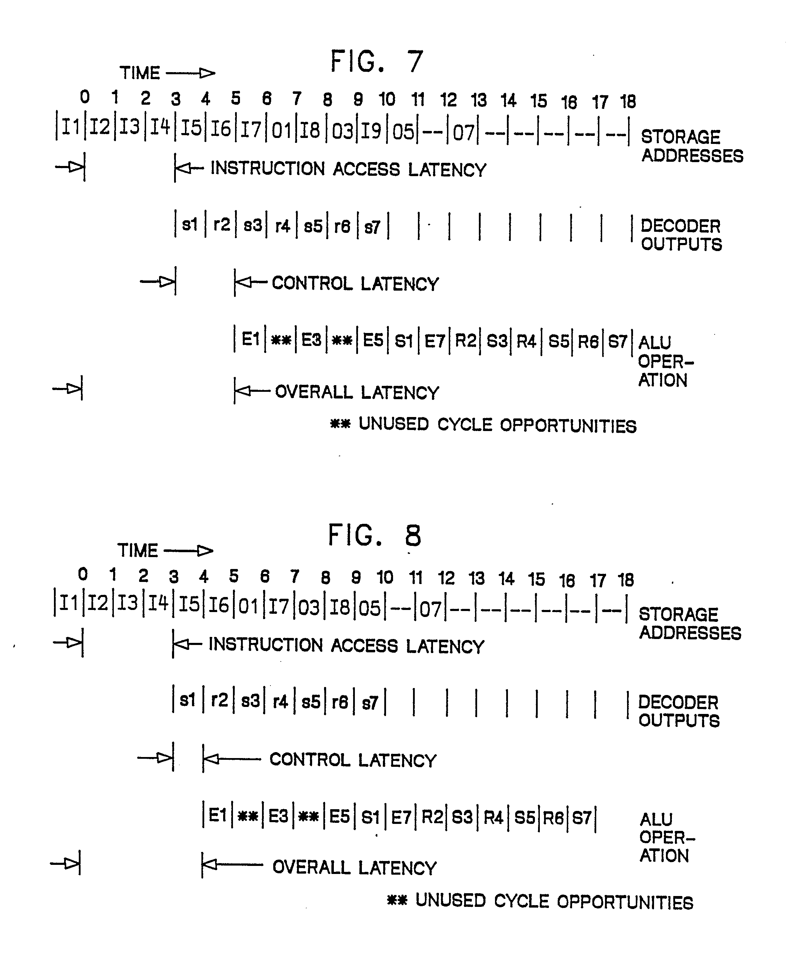

In the present invention, after instructions are available from storage at every cycle, the decoding of the instructions can take place at every cycle as seen in Fig. 7 irrespective of the type of instruction, i.e. whether the instruction is a RR or RS instruction. Of course if the instruction is a RR instruction there is no requirement to compute an effective address for an operand as in an RS instruction. For a RR instruction the operands are contained in registers in local store 70. The addresses for these registers in local store 70 come from the RR instruction and are applied to local store 70 from decoded instruction buffer 100 over buss 101 and via ALU control 120 and control buss 121. One of the operands from local store 70 is applied directly to ALU 90 via buss 71 and the other operand is passed to multiplexer 80 over buss 72 and therefrom over buss 81 to ALU 90. ALU control 120 provides control signals on buss 122 for controlling multiplexer 80 and on buss 123 for controlling ALU 90. Multiplexor 80 consists of logical circuits for selectively passing data from sources connected thereto under control of signals from ALU control 120.

The output from ALU 90 is applied to storage system 10, to local store 70 and to address translator 130. Thus ALU 90 can be used to update addresses and to compute new operands. The updated addresses are sent to address translator 130 and the new operands are either sent to storage 10 or returned to local store 70 depending upon the type of instruction. ALU control 120 provides sequence control 20 with control data over buss 124.

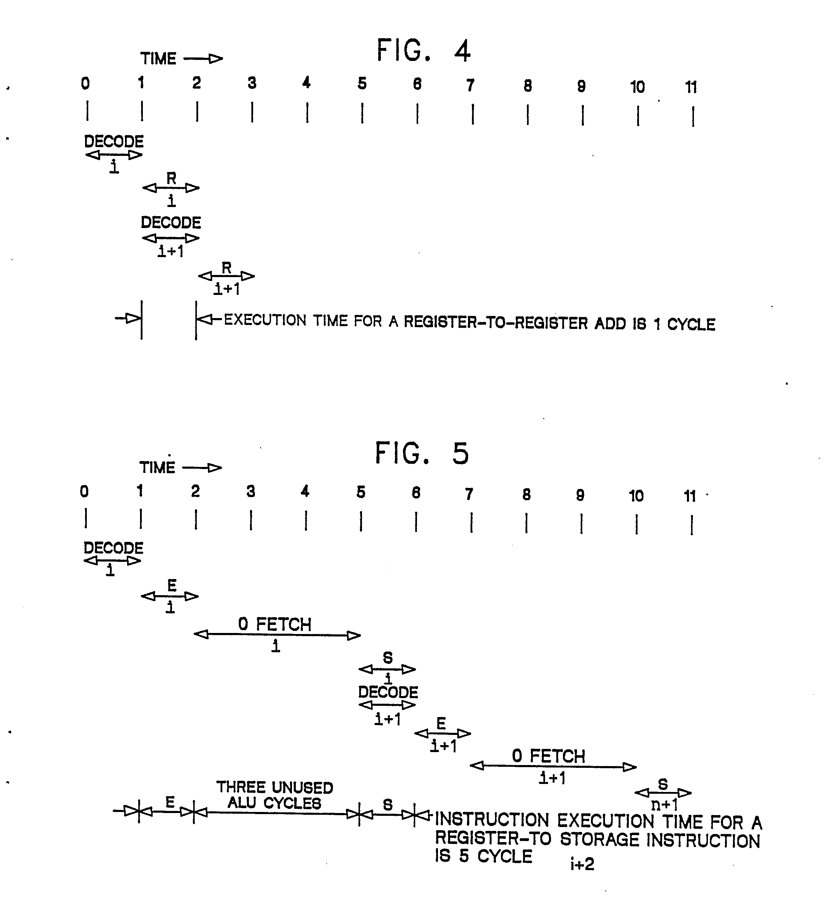

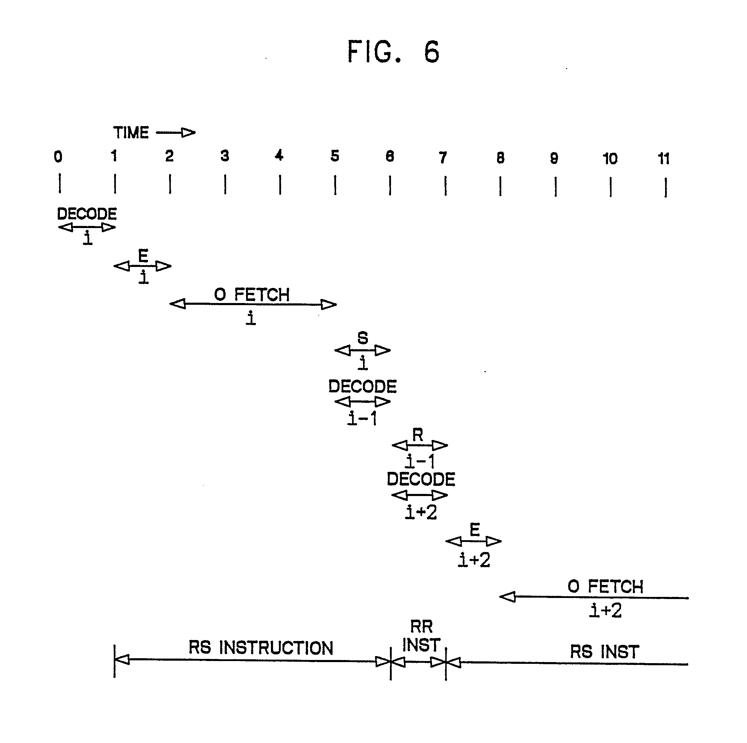

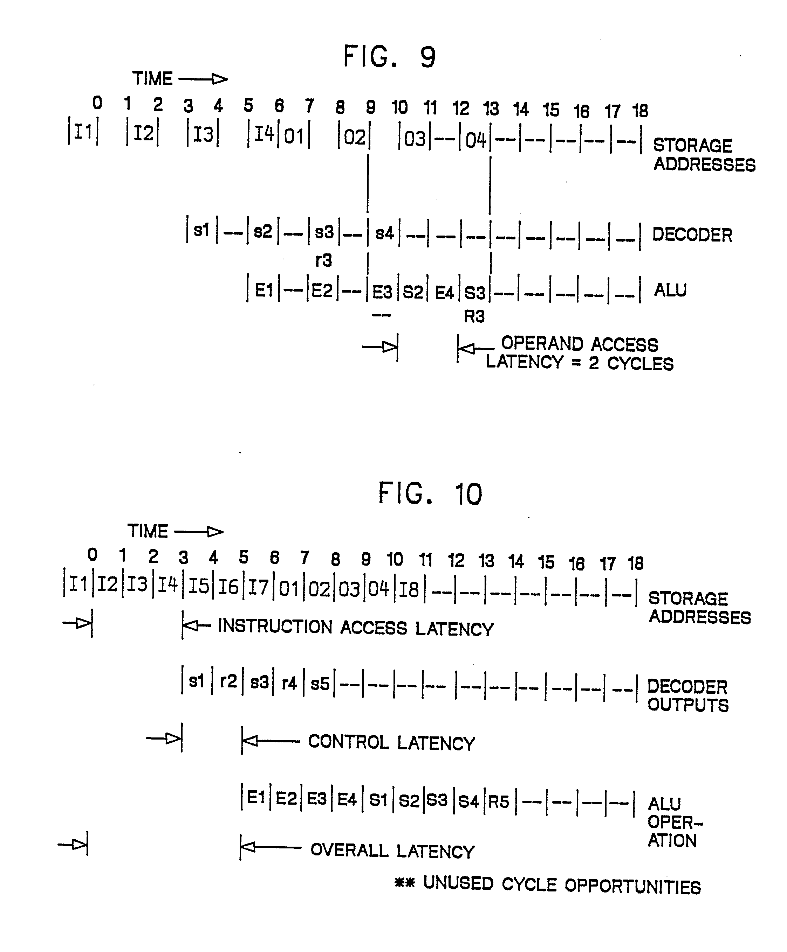

A RR instruction, depending upon the type of preceding instruction, can be executed either immediately after being decoded or after execution of a previously decoded RS instruction. Thus, if the first instruction decoded is a RR instruction or if there are successive RR instructions, execution thereof takes place as in prior art systems as shown in Fig. 4. If a RR instruction follows a RS instruction it is executed in the cycle immediately following the execution of the RS instruction as in Fig. 7, whereas in prior art systems there would either be the latency of the RS instruction as in Fig. 6 or the RR instruction would not be executed until two cycles after execution of the RS instruction as seen in Fig. 9.

For RS instructions, the first thing that must be done after decoding the RS instruction and retrieving it from decoded instruction buffer 100 under control of sequence control 20, is to compute the effective address of the operand which must be fetched from storage. It will be recalled that for RS instructions one operand resides in storage and the other operand comes from a register in local store 70. Usually the RS instruction provides displacement data to be used in computing the effective operand address and this displacement is entered into displacement register 110. The RS instruction also usually provides an address of a base or index register in local store 70 which contains the remaining data to be used in computing the effective address of the storage operand. This register address is passed to ALU control 120 and therefrom to local store 70. The cycle for computing the effective storage operand address in this example is called an E cycle. E cycles can occur as in Fig. 7 or as in Fig. 10, depending upon the RR and RS instruction mix in the present invention or as in Figs.5, 6 and 9 in prior art systems. Whether or not it is necessary to have a displacement buffer for the displacement depends upon the hardware technology used for implementing the invention. During the E cycle the displacement is applied to the ALU via multiplexor 80 while data from the selected index or base register is applied directly to ALU 90 over path 71. The computed effective storage operand address then passes from ALU 90 to address translator 130 and therefrom to storage system 10.

The operand so addressed is passed from storage, after it has been accessed, to operand buffer 50. Note that it takes storage three cycles to access the operand. Normally, these cycles would be wasted as in Fig. 6 with respect to activity in the ALU 90 or at best would be utilized in the manner shown in Fig. 9. In the present invention these cycles are used as shown in Figs. 7 and 10.

The next operation on a given instruction after its E cycle and after the storage operand has been accessed and placed into operand buffer 50 for a RS instruction is an execution cycle. During the execution cycle ALU 90 is placed into an execution mode by control data from sequence control 20 which is passed to ALU control 120. The buffered storage operand is presented from buffer 50 to ALU 90 via multiplexor 80 and the other operand is applied from a selected operand register in local store 70 directly to ALU 90. Depending upon the type of RS instruction, the ALU performs an arithmetic or .logical oepration. If, for example, an add is to take place, this is accomplished in one cycle. If the operation is a multiply or divide, for example, the first cycle of the operation is performed by the ALU and then the ALU control 120 directs the subsequent ALU cycles to complete the operation of the multicycle instruction. The ALU control 120 supplies status information and next instruction sequencing information via bus 124 to sequence control 20. Normally the resulting operand at the output of ALU 90 is returned to replace the operand in the selected register in the local store 70.

The sequential operation of the computer system of Fig. 1 is shown in Fig. 7. The fetch of the first instruction I1 begins at cycle time 0. In this instance I fetches continue on each successive cycle until it is necessary to preempt instruction fetch at cycle 6 time. In this example the first instruction, i.e. I1 is decoded at cycle time 3. Thus there is an instruction fetch latency of three cycles. The decode takes place and this consumes two cycles including the time at which control signals will be available to control the ALU 90. The I1 instruction is a RS instruction and in Fig. 7 it is designated as s1. The second decoded instruction is a RR instruction and it is designated r2. The s and r indicate instruction type and the numbers 1 and 2 indicate the instruction number. This convention is used consistently for the subsequent instructions.

With the s1 instruction decoded, and after two cycles have elapsed, i.e. at cycle time 5, ALU 90 is caused to perform a storage operand effective address computation and this is indicated by E1, where E indicates the type of operation and the number 1 indicates the instruction number associated with the operation. The address computation takes one cycle and ends at time 6. If the first instruction had been a RR instruction the earliest it could have been executed would have been at time 5.

The second decoded instruction is a RR instruction. It can not be executed at time 6, because to do so would result in an out of sequence instruction execution, because the decoded s1 instruction has not been executed. The storage operand to be used for the s1 instruction does not become available until cycle time 9. Therefore, decoding of instructions continues, but the ALU 90 is idle for that cycle time. Note there is no E2 because the second instruction is a RR instruction and no effective address computation is required for a RR instruction.

The ALU 90 can be rendered active at cycle time 7 because there is work to be done to compute the operand storage address for instruction s3 and this is indicated by E3. This ALU cycle opportunity can not be used in prior art computer systems. It should be noted that sequence control 20 has to determine that the E3 address computation does not conflict with the second instruction which in this case is r2. It is necessary to insure that the instruction r2 does not alter an index or base register used to compute the effective storage operand address E3.

If sequence control had determined that a conflict would occur, E3 would not take place until after the execution of instructions s1 and r2. Instruction decoder 60 makes the needed information available to sequence control 20 over buss 62. A simple sequential logic mechanism within sequence control 20 examines the decoded instruction stream and rules out conflicts before proceeding.

In Fig. 7 the effective storage operand addresses are indicated by the letter O. Thus, the first operand address O1 is passed to storage at cycle time 6 and therefore an I fetch can not take place, because as earlier indicated, operand fetching has priority over I fetch. Note that a storage operand address is passed to storage following every E cycle executed in the ALU 90.

An effective address E5 is computed at cycle 9 time, although it would have been possible to start the execution of the decoded s1 instruction. Whenever there is a choice between using the ALU cycle for effective address computation or for instruction execution, the ALU is controlled so as to perform effective address computation because an opportunity to perform effective address computation later on could be lost and thereby reduce maximum utilization of the ALU 90. Hence, the decoded s1 instruction is executed at cycle time 10 as indicated by S1 for the ALU operation. Similarly, the ALU 90 performs an effective address computation E7 before the decoded instruction r2 is executed. Instruction r2 is then executed at cycle time 12 as indicated by R2 for the ALU operation. Note that the instruction s3 can be executed in the cycle immediately following the cycle during which instruction r2 is executed. Thus, instruction s3 is executed at cycle time 13 as indicated by S3 for the ALU operation. Thereafter, instructions r4, s5, r6, and s7 are executed sequentially, keeping ALU 90 busy for each cycle and therefore maximizing its utilization.

In Fig. 8 it should be noted that the control latency is equal to only one cycle. The ALU operation sequence is the same as in Fig. 7 but advanced one cycle. The storage address sequence is changed because there is one less instruction fetch in advance of the first operand fetch O1. The relative magnitude of control latency depends upon the implementation used. As indicated above, the control could be hardwired logic circuitry or could be a microprocessor. With microprogram control, the control latency would include microstorage access time and would therefore result in longer control latency which could make it impractical to keep the control latency to one cycle.

It should be noted that the presence of conflicts and unconditional branches are not dependent upon the data or on the results of an operation and can be completely identified in advance. This is not possible for conditional branches and if a wrong guess is made as to the branch, the buffers must be flushed as is also true when an interrupt occurs.

From the foregoing it is seen that the invention optimizes operation of the computer system by performing effective address computation as early as possible to maximize utilization of the ALU. Thus ALU cycles which in the past have gone unused are now utilized.

## Claims

1. An improved control for a CPU having a single ALU in a computer system which sequentially processes at least RR and RS type instructions, the improvement comprising:

instruction decode means for decoding said RR and RS instructions,

decoded instruction buffer means for buffering data resulting from the decode of said RR and RS instructions,

ALU control means for placing said ALU in an instruction execution mode and in an address computation mode, and

control means responsive to said instruction decode means and connected to said ALU control means to cause said ALU control means to place said ALU in said instruction execution and said address conputation modes selectively to maximize operation of said ALU.

2. The improved control for a CPU as in claim 1 where said control means in response to data resulting from the decoding of a present instruction which indicates the requirement of an address computation will cause said ALU control means to place said ALU in an address computation mode so as to defer execution of a previously decoded instruction.

3. The improved control for a CPU as in claim 2 where said control means causes said ALU control means to maintain said ALU in an address computation mode for at least more than one cycle successively.

4. The improved control in a CPU as in claim 3 where said control means causes said ALU control means to maintain said ALU in an address computation mode for a predetermined number of successive cycles and thereby defering execution of said previously decoded instruction for a maximum number of cycles without destroying sequential execution of said RR and RS instructions.

5. The improved control in a CPU as in claim 4 wherein said predetermined number of successive cycles is four.

6. In a computer system having a storage system for storing instructions and operands and a CPU with a single ALU for sequentially processing instructions including at least RR and RS type instructions and where said storage system has a cycle time equal to the cycle time of said CPU and ALU and having an access time which is multiples of said cycle time, the improvement conprising:

instruction decode means for decoding said RR and RS instructions, decoded instruction buffer means for buffering data resulting from the decode of said RR and RS instructions by said instruction decode means, ALU control means for placing said ALU in address computation and instruction execution modes, and

control means responsive to said instruction decode means and connected to said ALU control means to cause said ALU control means to place said ALU in said instruction execution and said address computation modes selectively to maximize operation of said ALU.

7. The computer system of claim 6 wherein said storage access time is three times said storage cycle time.

8. The computer system of claim 6 wherein said control means causes said ALU control means to place said ALU in an address computation mode during said storage access time for accessing a present instruction to enable computation of a storage operand address for a previously decoded instruction.

9. The computer system of claim 6 further comprising:

storage operand buffer means for buffering operands accessed from storage system,

instruction operand buffer means for buffering instruction operands resulting from the decode of instructions by said instruction decode means,

local storage means for storing operands to be used by said ALU during the processing of instructions and connected to said control means and to said ALU to provide operands thereto and receive output results therefrom, and

multiplexer means connected to said ALU and connected to said local storage means, said decoded instruction buffer means, said storage operand buffer means and said instruction operand buffer means to receive operands therefrom and connected to be controlled by said control means whereby a selected operand is passed to said ALU along with another operand from said local storage means.

10. The computer system of claim 6 where said control means in response to data resulting from the decoding of a present instruction which indicates the requirement of an address computation will cause said ALU control means to place said ALU in said address computation mode and thereby defer execution of a previously decoded instruction.

11. The computer system of claim 6 which in processing four sequential RS type instructions will defer execution of the first RS instruction until the storage operand addresses for said four sequential RS instructions have been computed.

12. The computer system of claim 11 where the remaining three RS instructions are executed in sequence immediately after execution of said first RS instruction without any intervening operand address computations.

FIG. 1

TIME →

0  1  2  3  4  5  6  7  8  9  10  11

← ADDRESS OUT

DATA IN →

← FETCH →

## FIG. 2

MEMORY ACCESS TIME =
3 TIMES MEMORY CYCLE TIME

TIME →

0  1  2  3  4  5  6  7  8  9  10  11

← FETCH →

← FETCH →

← FETCH →

← FETCH →

## FIG. 3

# FIG. 4

TIME ⟶

0   1   2   3   4   5   6   7   8   9   10   11

DECODE
i

R
i

DECODE
i+1

R
i+1

◄─EXECUTION TIME FOR A REGISTER-TO-REGISTER ADD IS 1 CYCLE

# FIG. 5

TIME ⟶

0   1   2   3   4   5   6   7   8   9   10   11

DECODE
i

E
i

0 FETCH
i

S
i
DECODE
i+1

E
i+1

0 FETCH
i+1

S
n+1

THREE UNUSED
ALU CYCLES

E         S

◄INSTRUCTION EXECUTION TIME FOR A
REGISTER-TO STORAGE INSTRUCTION
IS 5 CYCLE      i+2

0 270 873

# FIG. 6

IBM − EN 985 042

## FIG. 7

TIME ⟶

| 0 | 1 | 2 | 3 | 4 | 5 | 6 | 7 | 8 | 9 | 10 | 11 | 12 | 13 | 14 | 15 | 16 | 17 | 18 |

|I1|I2|I3|I4|I5|I6|I7|01|I8|03|I9|05|--|07|--|--|--|--|--| STORAGE ADDRESSES

⟶| |◁— INSTRUCTION ACCESS LATENCY

|s1|r2|s3|r4|s5|r6|s7| | | | | | | | | | DECODER OUTPUTS

⟶| |◁— CONTROL LATENCY

|E1|**|E3|**|E5|S1|E7|R2|S3|R4|S5|R6|S7| ALU OPER-ATION

⟶| |◁— OVERALL LATENCY

** UNUSED CYCLE OPPORTUNITIES

## FIG. 8

TIME ⟶

| 0 | 1 | 2 | 3 | 4 | 5 | 6 | 7 | 8 | 9 | 10 | 11 | 12 | 13 | 14 | 15 | 16 | 17 | 18 |

|I1|I2|I3|I4|I5|I6|01|I7|03|I8|05|--|07|--|--|--|--|--|--| STORAGE ADDRESSES

⟶| |◁— INSTRUCTION ACCESS LATENCY

|s1|r2|s3|r4|s5|r6|s7| | | | | | | | | | DECODER OUTPUTS

⟶| |◁— CONTROL LATENCY

|E1|**|E3|**|E5|S1|E7|R2|S3|R4|S5|R6|S7| ALU OPER-ATION

⟶| |◁— OVERALL LATENCY

** UNUSED CYCLE OPPORTUNITIES

# FIG. 9

TIME ⟶

```
0  1  2  3  4  5  6  7  8  9  10  11  12  13  14  15  16  17  18
|I1|  |I2|  |I3|  |I4|01|  |02|  |03|--|04|--|--|--|--|--|  STORAGE
                                                            ADDRESSES

|s1|--|s2|--|s3|--|s4|--|--|--|--|--|--|--|--|  DECODER
              r3

|E1|--|E2|--|E3|S2|E4|S3|--|--|--|--|--|  ALU
              --           R3
```

OPERAND ACCESS
LATENCY = 2 CYCLES

# FIG. 10

TIME ⟶

```
0  1  2  3  4  5  6  7  8  9  10  11  12  13  14  15  16  17  18
|I1|I2|I3|I4|I5|I6|I7|01|02|03|04|I8|--|--|--|--|--|--|--|  STORAGE
                                                            ADDRESSES
```

INSTRUCTION ACCESS LATENCY

```
|s1|r2|s3|r4|s5|--|--|--|--|--|--|--|--|--|--|  DECODER
                                                OUTPUTS
```

CONTROL LATENCY

```
|E1|E2|E3|E4|S1|S2|S3|S4|R5|--|--|--|--|  ALU
                                          OPER-
                                          ATION
```

OVERALL LATENCY

** UNUSED CYCLE OPPORTUNITIES